Europäisches Patentamt

European Patent Office

Office européen des brevets

(19)

(11) Numéro de publication : **0 441 665 A1**

# (12) DEMANDE DE BREVET EUROPEEN

(21) Numéro de dépôt : **91400026.0**

(22) Date de dépôt : **08.01.91**

(51) Int. Cl.$^5$ : **G01N 27/00**

---

(30) Priorité : **08.01.90 FR 9000128**

(43) Date de publication de la demande :
**14.08.91 Bulletin 91/33**

(84) Etats contractants désignés :
**BE CH DE ES FR GB IT LI NL**

(71) Demandeur : **EG ET G**
**18ter, rue des Osiers Coignieres**
**F-78310 Maurepas (Yvelines) (FR)**

(72) Inventeur : **Groeninger, Kurd G.**
**Calames 15**
**CH-2412 Le Col Des Roches (CH)**

(74) Mandataire : **Martin, Jean-Jacques et al**
**Cabinet REGIMBEAU 26, Avenue Kléber**
**F-75116 Paris (FR)**

---

(54) **Capteur d'humidité et installation de mesure comportant une pluralité de tels capteurs.**

(57)     L'invention concerne un capteur d'humidité relative ou d'activité d'eau caractérisé en ce qu'il comprend :
    un corps (130) définissant une cavité,
    au moins un élément sensible à l'humidité (112a, 112b) comportant une languette résonnante en quartz revêtue au moins partiellement d'un matériau adsorbant, et disposée au sein de la cavité,
    au moins un élément résonnant sensible à la température disposé également dans la cavité,
    au moins une membrane (102, 110) apte à laisser passer la vapeur tout en constituant une barrière aux liquides, située entre la cavité et le milieu dont l'humidité relative ou l'activité d'eau est à mesurer, et
    des moyens pour déterminer la fréquence de résonance des éléments sensibles et en déduire la valeur de l'humidité relative ou de l'activité d'eau du milieu, ainsi que de la température.
    Elle concerne également une installation incorporant une pluralité de tels capteurs.
    Application notamment à la détermination et au suivi de l'humidité relative et/ou de l'activité d'eau et/ou de la teneur en eau de tout produit solide en cours de traitement industriel.

EP 0 441 665 A1

FIG_1

# CAPTEUR D'HUMIDITE ET INSTALLATION DE MESURE COMPORTANT UNE PLURALITE DE TELS CAPTEURS

La présente invention concerne d'une façon générale un capteur d'humidité relative ou d'activité d'eau et une installation comportant de tels capteurs.

Dans la technique antérieure, la mesure d'humidité relative ou d'activité d'eau en milieu industriel, par exemple sur des produits pulvérulents ou granuleux circulant dans des conduites, est effectuée en mettant un matériau absorbant ou désorbant au contact de l'atmosphère régnant dans le produit et en mesurant des variations de paramètres électriques résultant des variations de la quantité d'eau adsorbée ou désorbée par le produit. Plus précisément, on sait à l'heure actuelle baser des mesures d'humidité relative sur la détermination de variations de résistance électrique ou de variations de coefficient diélectrique d'un tel matériau en fonction de la quantité d'eau qu'il contient.

Un inconvénient majeur des solutions connues réside en ce qu'elles impliquent toutes l'établissement d'un courant ou d'une tension, dont les variations d'amplitude vont fournir après traitement l'information d'humidité relative recherchée. Ainsi, il est nécessaire de faire appel à des appareils électroniques de grande qualité pour éviter toute imprécision résultant de variations de l'amplitude de la quantité électrique qui n'ont pas pour origine une variation de la quantité d'eau. Et en pratique, des dispositifs de mesure d'un coût abordable n'offrent pas une précision élevée.

La présente invention vise à pallier ces inconvénients de la technique antérieure et à proposer un nouveau capteur et une nouvelle installation qui permettent de mesurer l'humidité relative et/ou l'activité d'eau d'une atmosphère et le cas échéant la teneur en eau d'un milieu solide d'une manière extrêmement précise.

Elle concerne à cet effet, selon un premier aspect, un capteur d'humidité relative ou d'activité d'eau, caractérisé en ce qu'il comprend, en combinaison :

un corps définissant une cavité,

au moins un élément sensible à l'humidité comportant une languette résonnante en quartz revêtue au moins partiellement d'un matériau adsorbant, et disposée au sein de la cavité,

au moins un élément résonnant sensible à la température disposé également dans la cavité,

au moins une membrane apte à laisser passer la vapeur tout en constituant une barrière aux liquides, située entre la cavité et le milieu dont l'humidité relative et/ou l'activité d'eau est à mesurer, et

des moyens pour déterminer la fréquence de résonnance des éléments sensibles et en déduire la valeur de l'humidité relative ou de l'activité d'eau du milieu, ainsi que de la température.

Des aspects préférés mais non limitatifs du capteur selon l'invention sont les suivants :

- le ou chaque élément sensible à l'humidité est logé dans un boîtier ouvert en céramique.

- il comprend deux éléments sensibles à l'humidité identiques, disposés sensiblement à égale distance de la membrane.

- le ou chaque élément sensible à la température est un quartz diapason et il est prévu des moyens pour déterminer la fréquence de résonnance du ou des quartz diapason et en déduire la valeur de la température.

- il est prévu deux éléments sensibles à la température dont l'un est situé sensiblement à la même distance de la membrane que le ou les éléments sensibles à l'humidité et dont l'autre est situé à plus grande distance de la membrane, et il est prévu des moyens de régulation de température comprenant un moyen de chauffage disposé dans la cavité et commandé en fonction de la différence entre les températures mesurées par les deux éléments sensibles à la température.

- il comprend un premier circuit imprimé portant les deux éléments sensibles à l'humidité et le premier élément sensible à la température et un second circuit imprimé portant le second élément sensible à la température et le moyen de chauffage, le premier circuit étant disposé entre le second circuit et la ou les membranes.

- il comprend en outre un connecteur amovible dont les éléments de connexion fixés au capteur constituent également des moyens d'assemblage des deux circuits imprimés l'un au dessus de l'autre.

- il est prévu une première membrane, par exemple en acier inoxydable, céramique ou verre, dans laquelle sont pratiqués une pluralité de trous de faibles dimensions, et une seconde membrane en polytétrafluoréthylène expansé, les deux membranes étant placées sensiblement l'une contre l'autre et la membrane en acier inoxydable étant située du côté extérieur par rapport à la cavité.

- les deux membranes sont montées sur une bague support elle-même montée de façon amovible sur le corps du capteur.

- on utilise une membrane en acier d'une épaisseur comprise entre 0,02 et 0,05 mm, les trous ayant un diamètre compris entre 0,02 et 0,08 mm et la surface des trous représentant de l'ordre de 15 à 25 % de la surface totale de la membrane.

La présente invention concerne également, selon un second aspect, une installation de mesure de la teneur en eau d'un ou plusieurs produits en plusieurs endroits d'un équipement industriel de traitement, caractérisée en ce qu'elle comprend :

une pluralité de capteurs tels que définis ci-dessus,

des moyens modulateurs optiques associés à chaque capteur pour délivrer un signal optique représentatif du signal électrique de résonnance du ou des éléments sensibles à l'humidité du capteur associé,

une unité centrale reliée aux moyens modulateurs optiques par une pluralité de fibres optiques et comprenant :

une pluralité de démodulateurs optiques respectivement associés à chaque capteur, et aptes à convertir des signaux optiques reçus en signaux électriques,

des moyens de sélection pour appliquer sur une sortie l'un au choix desdits signaux électriques,

des moyens de mesure de fréquence, et

des moyens pour commander les moyens de sélection et pour convertir les valeurs de fréquences en des valeurs d'humidité relative ou d'activité d'eau en association avec chacun des capteurs.

Des aspects préférés mais non limitatifs de l'installation selon la présente invention sont exposés ci-dessous :

– dans le cas où chaque capteur comprend au moins deux éléments sensibles à quartz, les moyens modulateurs optiques comprennent en outre un moyen de sélection pour moduler l'un au choix des signaux électriques de résonnance des différents éléments sensibles.

– dans le cas où chaque capteur comprend au moins un élément sensible à l'humidité et un élément sensible à la température, les moyens de commande et de sélection comprennent en outre des moyens pour calculer à partir des valeurs d'activité d'eau et de valeurs de température obtenues et à partir de courbes isothermes teneur en eau/activité d'eau mémorisées et associées au(x) produits dont l'activité d'eau est mesurée, des valeurs de teneur en eau du ou des produits.

– elle comprend en outre des moyens d'affichage pour afficher l'évolution de l'activité d'eau et/ou de la teneur en eau du ou des produits en fonction du temps.

– elle comprend en outre des moyens pour comparer des valeurs d'activité d'eau ou de teneur en eau avec au moins une valeur de seuil et pour signaler le franchissement du ou des seuils.

D'autres aspects, buts et avantages de la présente invention apparaîtront mieux à la lecture de la description détaillée suivante d forme de réalisation préférée de celle-ci, donnée à titre d'exemple non limitatif et faite en référence au dessin annexé, sur lequel :

la figure 1 est une vue d'ensemble en coupe axiale d'un capteur selon la présente invention,

la figure 2 est une vue de détail en perspective éclatée du capteur de la figure 1,

la figure 3 est une vue en perspective d'un élément sensible du capteur des figures 1 et 2,

la figure 4 est un schéma-bloc d'une installation de mesure incorporant une pluralité de capteurs selon les figures 1 et 2, et

la figure 5 est un schéma-bloc d'une partie de l'installation de la figure 4.

On indiquera tout d'abord que, d'une figure à l'autre, des éléments ou parties identiques ou similaires sont désignés par les mêmes numéros de référence.

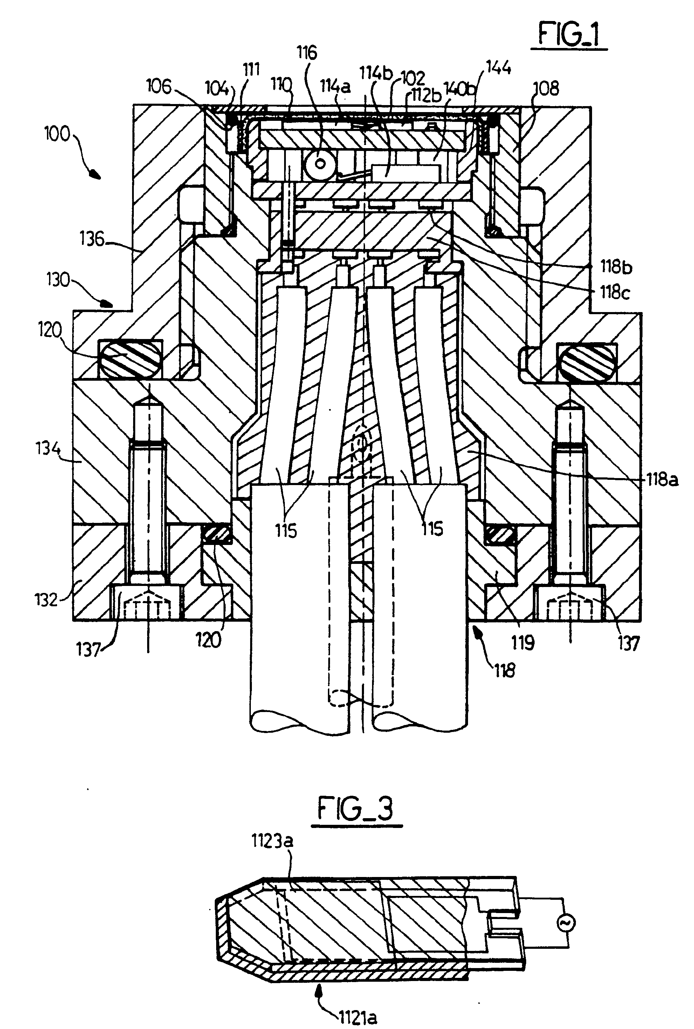

En référence tout d'abord à la figure 1, un capteur d'humidité 100 selon l'invention comprend une membrane mince 102, réalisée dans le présent exemple en acier inoxydable, dans laquelle sont formés une pluralité de trous traversants (non visibles). Par exemple, on peut prévoir une membrane d'une épaisseur de l'ordre de 0,03 mm, des trous d'un diamètre de l'ordre de 0,03 à 0,05 mm et un coefficient d'occupation de la surface de la membrane par les trous de l'ordre de 20%.

Il est à noter que la membrane 102 peut également être réalisée en céramique, verre ou analogue.

Une telle membrane est perméable aux gaz, tandis qu'elle ne laisse passer sensiblement aucun liquide, ni aucun solide, même sous forme pulvérulente de granulométrie faible.

La membrane 102 est emprisonnée au niveau de ses bords entre une rondelle plate 104, également en acier inoxydable, et un joint d'étanchéité 106 en matériau élastique tel que du caoutchouc, l'ensemble étant fixé sur une ouverture frontale d'une bague de support 108.

La membrane 102 est doublée intérieurement par une membrane souple 110 propre à laisser passer les gaz, et en particulier l'eau sous forme de vapeur, tout en empêchant le passage de l'eau liquide. On choisit de préférence une membrane en polytétrafluoréthylène expansé connue sous la dénomination commerciale "Gore-Tex". De préférence, on choisit une membrane dont les pores ont un diamètre voisin de 0,4 µm.

En arrière des membranes 102 et 110, et à proximité de celles-ci, se trouvent deux éléments sensibles à quartz 112a et 112b, identiques et constituant des capteurs d'humidité. Au voisinage des quartz 112a et 112b sont prévus un premier quartz 114a pour la mesure de la température dans l'environnement desdits quartz 112a et 112b, ainsi qu'une résistance électrique de puissance 116 permettant de réguler, comme on le verra plus loin, la température dans cet environnement.

Un second quartz de mesure de température 114b est situé plus loin dans le boîtier du capteur, à des fins expliquées plus loin.

Le capteur comprend en outre un connecteur arrière, globalement indiqué en 118, qui permet sa connexion de façon amovible avec son environnement, comme on le verra plus loin.

L'étanchéité de l'espace intérieur du capteur est réalisée à l'aide de joints toriques 120 entre les divers composants du capteur.

Le boîtier du capteur, qui abrite les éléments ci-dessus, est globalement indiqué en 130 et comporte un corps 134 qui peut soit (comme illustré) être vissé sur une bague formant carter 136, soudée par exemple sur la surface extérieure d'une canalisation acheminant un produit dont on souhaite mesurer l'humidité relative ou l'activité d'eau, soit encore être fixé à l'extrémité d'une canne ou tige (de façon non illustrée), afin de permettre son immersion dans un milieu dont on souhaite mesurer l'humidité relative ou l'activité d'eau.

Le boîtier 130 du capteur comprend également une plaque arrière 132. Des boulons 137 permettent la fixation de la plaque 132 sur le corps 134.

Le connecteur 118, réalisé de préférence sous la forme d'un corps 118a moulé d'un seul tenant, est emprisonné grâce à une bague intermédiaire 119 entre la plaque arrière de maintien 132 et le corps 134, dans une cavité définie conjointement par ces deux éléments. Le corps de connecteur 118a abrite des conducteurs coaxiaux 115 dont les extrémités sont soudés à des broches mâles de connexion 118b fixées sur une plaque frontale 118c du connecteur et aptes à être engagés dans des fourreaux associés qui seront décrits plus loin.

Un premier circuit imprimé 142, de forme circulaire, est reçu par ses bords entre un gradin du corps 134 du capteur et un élément annulaire de support 144. Cet élément de support 144 reçoit également, sur un gradin, un second circuit imprimé circulaire 146 situé entre le premier circuit 142 et les membranes 102 et 110.

Le second circuit 146 porte les deux quartz d'humidité 112a et 112b ainsi que le premier quartz de température 114a, qui sont montés par exemple par des soudures, tandis que le premier circuit 142, situé en arrière du circuit 146 par rapport aux membranes 102 et 110, porte le second quartz de température 114b et la résistance de chauffage 116, fixés en place également par des soudures.

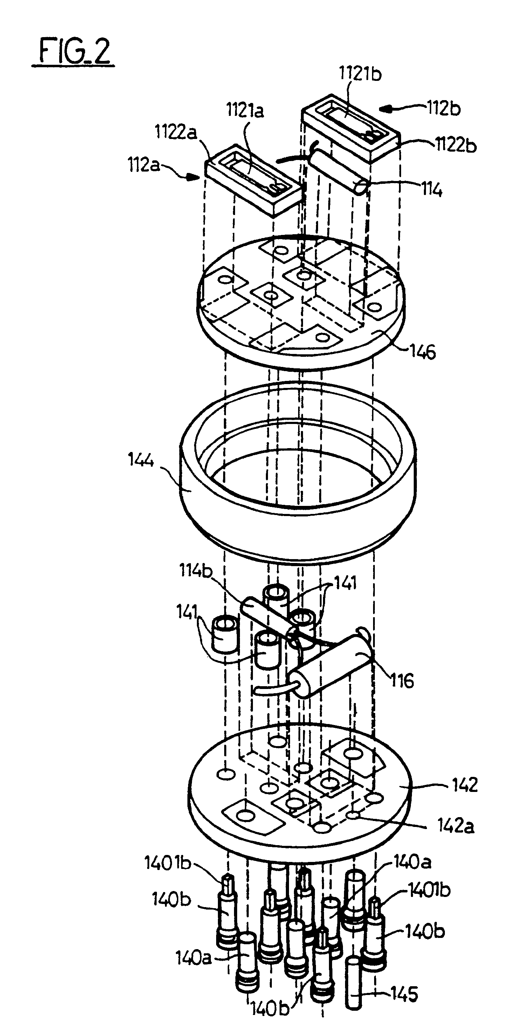

Comme le montre bien la figure 2, les quartz de détection d'humidité 112a et 112b se présentent sous la forme classique de languettes ou lames résonnantes 1121a et 1121b, respectivement, qui sont logées dans des boîtiers respectifs 1122a et 1122b de préférence en céramique. Les deux bornes de connexion de chaque languette de quartz, non visibles, sont prévues sur la face inférieure du boîtier respectif, dans la région de ses deux extrémités longitudinales.

Par ailleurs, les divers quartz et la résistance sont reliés aux broches de connexion 118b du connecteur 118 par l'intermédiaire d'éléments de contact 140 comportant chacun à leur partie inférieure un logement femelle pour la broche associée. Certains éléments de contact 140a ne sont reliés électriquement qu'au circuit imprimé inférieur 142 tout en formant des entretroises entre les deux circuits, tandis que d'autres éléments de contact 140b comportent un prolongement 1401b qui traverse le circuit imprimé supérieur et vient au contact d'une piste approprié de ce dernier pour y être soudé.

On trouve par ailleurs entre les deux circuits 142, 146 des manchons isolants 141 qui évitent tout contact électrique accidentel des éléments 140b avec leur environnement, et notamment le capteur 114b.

Par ailleurs, un détrompeur 145, en association avec un trou de même diamètre 142a formé dans le circuit 142, assure que ce dernier présente dans le capteur l'orientation requise.

La bague de support 108 mentionnée plus haut tient lieu de couvercle pour le capteur. Elle est constituée par un élément essentiellement annulaire intérieurement taraudé et qui est apte à être vissé sur un filetage 134a du corps 134 du capteur.

Ce couvercle 108 porte à son extrémité la rondelle 104, la membrane 102 et le joint torique 106, et emprisonne entre lui et le corps 134 la membrane en "Gore-Tex" 110 ainsi qu'une bague en aluminium 111 dont le rôle est de venir presser les bords de ladite membrane 110 contre la surface extérieure du support 144 des circuits imprimés à des fins d'étanchéification.

Dans le capteur décrit ci-dessus, tous les éléments susceptibles de venir au contact de la matière dont on mesure l'humidité relative ou l'activité d'eau (à savoir la rondelle 104 et première membrane 102) sont réalisés en acier inoxydable ou analogue, ce qui confère au capteur une excellente longévité. En outre, le fait de prévoir un couvercle vissable 108 permet de procéder facilement au remplacement des membranes si nécessaire.

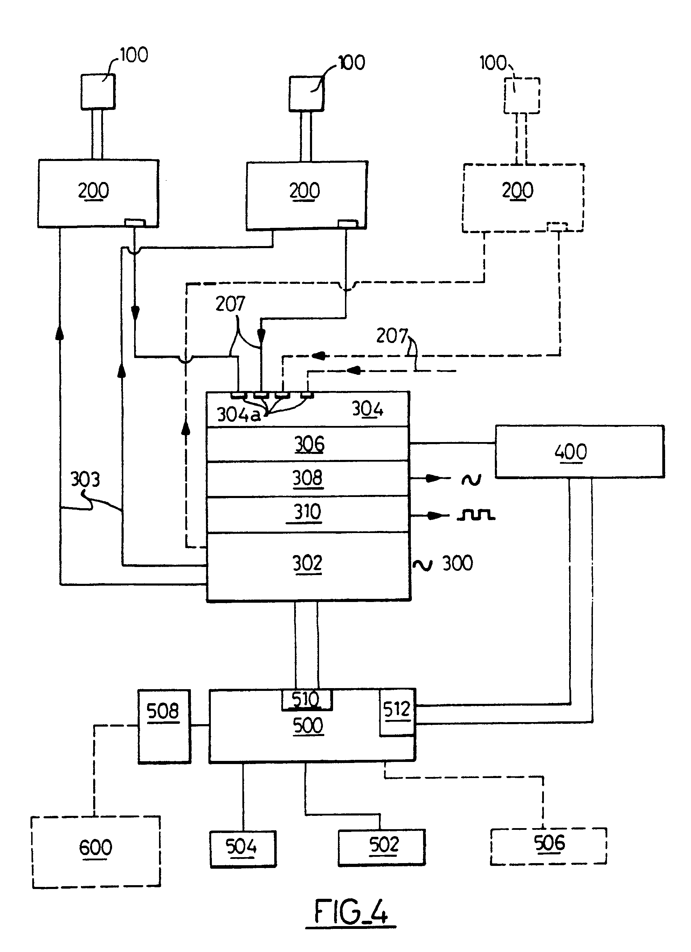

La figure 3 illustre schématiquement l'une 1121a des deux languettes ou lames de quartz identiques formant éléments sensibles à l'humidité.

Le caractère sensible à l'humidité est obtenu en revêtant la languette à l'aide d'un matériau présentant des propriétés particulières, notamment en matière d'adsorption de l'eau. Ce revêtement est indiqué en 1123a sur la figure 3. Et ce sont les variations de masse de la languette et de son revêtement en fonction de l'humidité relative Hr ou de l'activité d'eau aW du milieu dans lequel se trouve le détecteur qui font varier la fréquence de résonance du quartz, pour ainsi détecter ces variations d'humidité relative ou d'activité d'eau. Ce principe, connu en soi mais qui n'avait pu jusqu'à présent être utilisé efficacement pour mesurer une activité d'eau en continu dans un processus industriel, est décrit dans l'article "Piezoelectric Sorption Detector", William H. KING, Jr., revue -ANALYTICAL CHEMISTRY, vol. 36, No. 9, Août 1964, p. 1735 et suivantes, ainsi que dans l'article "Relative Humidity Measurements Using a Coated Piezoelectric Quartz Crystal Sensor", Jean-Paul RANDIN et Freddy ZULLIG, revue Sensors and Actuators, No. 11, 1987, pp. 319 à 328.

On se reportera pour plus de détails à ces deux articles, dont les contenus respectifs sont inclus dans la présente description par référence.

Pour ce qui concerne le choix du matériau de revêtement de la languette de quartz, il est effectué, pour obtenir une mesure d'humidité relative ou d'activité d'eau la plus fidèle possible, en fonction des considérations suivantes :

- il doit être hydrophile et adsorber et désorber l'eau de manière reproductible ;

- il doit avoir une isotherme de sorption (quantité d'eau fixée en fonction de l'humidité relative ambiante) aussi grande que possible ;

- l'adsorption doit se faire avec un coefficient de diffusion élevé, favorisant une rapide pénétration des molécules d'eau ;

- les isothermes de sorption pour différentes températures doivent être aussi proches que possible les unes des autres (faible paramètre de température) ;

- les isothermes d'adsorption/désorption doivent présenter une hystérésis aussi limitée que possible ;

- le matériau doit adsorber l'eau de manière extrêmement sélective vis-à-vis des autres gaz ;

- il doit rester utilisable, avec les mêmes isothermes, même après avoir été saturé en eau ;

- il doit résister aux agressions chimiques des gaz contenus dans son atmosphère et conserver son intégrité ;

- il doit pouvoir être mis en adhérence sur la languette de quartz de façon aisée et fiable, même en une épaisseur réduite, et pénétrer lors du dépôt dans les pores du quartz.

D'une façon générale, des matériaux de types tout à fait divers peuvent satisfaire aux exigences ci-dessus, et notamment des polymères, en particulier des polymères à groupe pyridinique, des métaux et oxydes métalliques, des semi-conducteurs.

De façon plus particulière, mais non limitative, on utilise dans le présent exemple un matériau de revêtement choisi dans le groupe comprenant les acides sulphoniques polymériques, l'oxyde de silicium SiOx, une résine époxyde modifiée et l'acétate de cellulose.

Pour les matières polymériques, le revêtement peut être effectué par immersion dans une solution contenant le produit de revêtement dissous dans un solvant approprié, puis séchage. L'oxyde de silicium peut être déposé par évaporation.

Bien entendu, toute autre technique peut être utilisée pour effectuer le revêtement, et notamment évaporation sous vide, pulvérisation cathodique, revêtement électrolytique, etc..., le choix étant fait en fonction de la nature du matériau.

Pour plus de détails sur ces matériaux de revêtement on se référera plus particulièrement à l'article de Randin et al. mentionné en second ci-dessus.

Par ailleurs, on notera que la languette de quartz peut être revêtue du matériau adsorbant soit sur ses deux faces, soit sur une seule face, soit encore sur une partie seulement de l'une ou des deux faces.

De préférence, l'épaisseur du revêtement de matériau adsorbant est comprise entre une fraction de micron et quelques microns, par exemple autour de 1 micron.

Pour ce qui concerne les capteurs de température, on utilise de façon classique des quartz diapason, oscillant à des fréquences de l'ordre de 260 kHz et qui ont pour propriété de réagir très rapidement et très précisément aux changements de température.

Le capteur d'humidité décrit ci-dessus fonctionne de la manière suivante. L'air (ou autre gaz ou mélange de gaz) chargé en vapeur d'eau, contenu dans la canalisation sur laquelle le capteur est raccordé, pénètre dans la cavité définie dans le capteur à travers les membranes 102 et 110. Une quantité d'eau, qui est fonction de l'humidité relative ou de l'activité d'eau du gaz, est adsorbée sur le revêtement de chaque quartz d'humidité 112a, 112b, pour accroître la masse de la lame résonnante et faire varier sa fréquence de résonnance. On peut noter ici qu'en utilisant deux quartz d'humidité identiques et en confrontant les variations de fréquences qu'ils présentent, on peut vérifier le bon état de chacun de ceux-ci.

En outre, les quartz de température 114a, 114b ont une fréquence de résonnance qui varie en fonction de la température. Les fréquences des deux quartz sont régulièrement confrontées et, en cas d'écart de température anormal, la résistance de chauffage 116 est alimentée pour réchauffer l'atmosphère située dans le voisinage du second quartz 114b et ainsi équilibrer la température au sein de la cavité du capteur. On minimise ainsi les gradients de température susceptibles d'affecter la précision des mesures.

La variation de fréquence des lames résonnantes des quartz d'humidité permet de déterminer facilement leur variation de masse. Connaissant la surface et l'épaisseur du revêtement adsorbant et sa loi d'adsorption/désorption en fonction de l'humidité relative environnante pour une température donnée, il est facile de déduire de la masse de la lame à un instant donné l'humidité relative ou activité d'eau dans son environnement.

En supposant que le gaz dans la cavité du capteur et dans la canalisation sont dans le même état, ce qui est assuré par le choix judicieux des membranes, on détermine ainsi l'humidité relative ou l'activité d'eau de l'air ou autre gaz dans ladite canalisation. Et si l'on connaît en outre les isothermes teneur en eau/activité d'eau du produit qui circule dans la canalisation, on peut finalement déterminer la teneur en eau du produit.

Il est à noter que les opérations ci-dessus peuvent être effectuées en un temps relativement court, et l'on peut grâce à l'invention obtenir un suivi pratiquement en temps réel des évolution de ladite teneur en eau.

On a représenté sur la figure 4 une installation de mesure d'humidité relative ou d'activité d'eau, et de teneur en eau, utilisant des capteurs tels que décrits ci-dessus et destinée à être implantée sur un site industriel pour la mesure en continu de l'activité d'eau d'un produit traité.

Cette installation comprend tout d'abord, en association avec chaque capteur 100 tel que décrit ci-dessus, un module électronique d'interfaçage 200. Il est prévu en outre une unité centrale 300, un fréquence-mètre 400 et un calculateur 500.

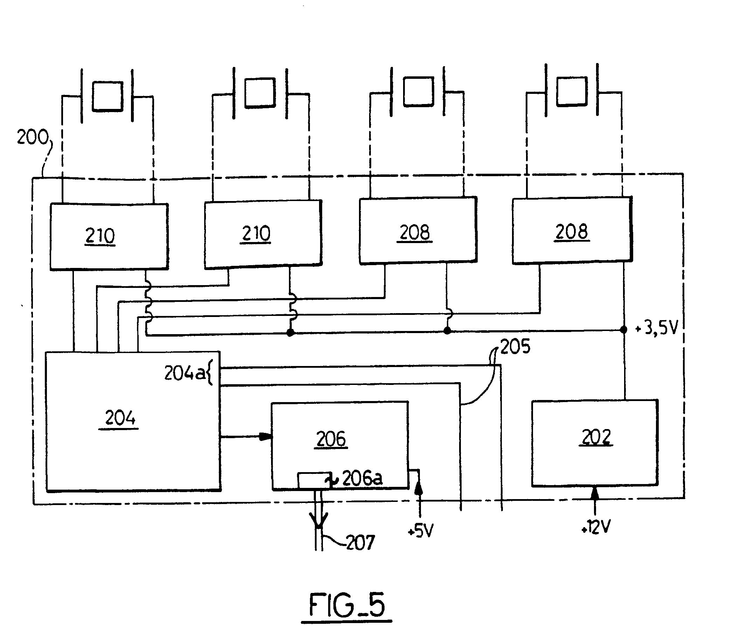

Chaque module 200 est relié au capteur associé 100 par les câbles électriques coaxiaux 115 décrits plus haut, avec une longueur de câbles de préférence relativement courte, par exemple de l'ordre de 1m. Un module 200 est représenté en détail sur la figure 5.

Chaque module 200 comprend :
- une alimentation 202 apte à délivrer, à partir d'une tension de +12 volts fournie par l'unité centrale 300, une tension stabilisée plus faible, par exemple +3,5 volts ;
- un sélecteur (multiplexeur) 204 commandé par le calculateur 500 via l'unité centrale 300 de manière à effectuer la sélection de l'un des quatre signaux de sortie alternatifs des quartz 112a, 112b, 114a et 114b ; les entrées pour les deux lignes binaires 205 nécessaires à cette sélection parmi quatre entrées sont indiquées en 204a ;
- un émetteur optique 206 dont l'entrée de signal électrique est reliée à la sortie du sélecteur 204 dont le signal optique de sortie, engendré par une diode électroluminescente appropriée, peut être appliqué à une fibre optique 207 par un connecteur approprié 206a ;
- deux premiers oscillateurs 208 qui sont alimentés par l'alimentation 202 et associés aux quartz de mesure d'activité d'eau 112a et 112b ; on peut utiliser par exemple une fréquence de l'ordre de 10MHz ; et
- deux seconds oscillateurs 210 également alimentés par l'alimentation 202 et associés aux quartz de mesure de température 114a et 114b ; on peut utiliser par exemple une fréquence de l'ordre de 260 KHz.

Ainsi chaque module 200 est capable, sous le contrôle de l'unité centrale 300, d'appliquer sur la fibre optique 207 à un instant donné un signal optique correspondant au signal électrique de résonnance de l'un quelconque parmi les quatre quartz de mesure ;

il est à noter que l'emploi d'un sélecteur à semi-conducteurs permet d'envoyer à l'unité centrale les divers signaux à des cadences élevées, si nécessaire.

Chaque module 200 ainsi relié au capteur associé par huit câbles coaxiaux (par exemple des câbles de 75 Ω, comme décrit plus haut, ainsi que par deux conducteurs 212 d'alimentation de la résistance de chauffage 116. Par ailleurs, chaque module 200 est relié à l'unité centrale 300 d'une part par la fibre optique acheminant les signaux de sortie du capteur, et d'autre part par un câble à plusieurs conducteurs qui achemine :
- le +12V nécessaire à l'alimentation 202 ;
- le +5V nécessaire à l'alimentation de l'émetteur optique ;
- le +5V nécessaire à l'alimentation de la résistance de chauffage 116 ;
- les deux signaux binaires de sélection appliqués au sélecteur ; et
- la masse.

De préférence, on utilise comme oscillateurs des oscillateurs de Pierce basés sur des circuits intégrés TTL à portes NON-ET.

L'unité centrale 300 est dans le présent exemple capable de gérer un ensemble de quatre couples capteur 100/module électronique 200.

Elle comprend une alimentation électrique 302 apte à délivrer les tensions continues stabilisées nécessaires pour faire fonctionner les divers éléments de l'installation, et notamment les tensions de +5V et +12V aux modules 200 via les lignes schématisées 303. On trouve en outre une carte de quatre récepteurs optiques, globalement indiquée en 304, qui comporte quatre connecteurs pour quatre fibres optiques telles que 207 provenant des modules 200 et qui est apte à convertir les signaux optiques reçus en signaux électriques. On utilise de préférence des récepteurs à large bande de manière à pouvoir recevoir indifféremment les fréquences associés à la mesure d'activité d'eau et les fréquences associés à la mesure de température.

Grâce à l'utilisation des fibres optiques 207, on peut prévoir entre les modules 200 et l'unité centrale 300 une distance extrêmement élevée, de l'ordre d'un ou plusieurs kilomètres, ce qui permet l'implantation de l'installation sur des sites industriels très vastes.

On trouve également une carte de multiplexage ou sélection 306 qui reçoit en entrée les quatre sorties de signaux électriques de la carte de récepteurs 304. Une sélection d'un signal particulier parmi ces quatre signaux est effectuée par application deux deux signaux binaires de sélection en provenance du calculateur 500. La sortie du sélecteur 306 est appliquée à l'entrée du fréquence-mètre 400, comme on le détaillera plus loin. Une carte 308 peut éventuellement être prévue pour délivrer sous forme analogique des informations d'activité d'eau, teneur en eau et température. Plus précisément, il peut s'agir d'une carte de convertisseurs numérique/analogique qui reçoit des informations d'activité d'eau, de teneur en eau et de température, sous forme numérique, à partir du calculateur 500, et qui les convertit en tensions ou courants analogiques selon les gammes courantes des appareils de mesure analogiques.

Une carte d'extensions 310 peut également être prévue pour délivrer les mêmes signaux, mais sous forme numérique et au format TTL.

Les cartes optionnelles 308 et 310 permettent ainsi de façon extrêmement souple la connexion de l'ensemble constitué des capteurs 100, des modules électroniques 200 et de l'unité centrale 300 à toute sorte d'équipement de gestion de processus ou analogue.

Le fréquence-mètre 400 est de préférence un fréquence-mètre numérique de conception classique et de haute qualité (base de temps thermostatée ou compensée en température).

Le calculateur 500 peut être un micro-ordinateur du commerce, par exemple au standard PC. Il comprend un clavier 502, un écran de visualisation 504, par exemple un écran couleur à haute définition, une imprimante 506 et si nécessaire une interface 508 pour communication avec un ordinateur de régulation ou de gestion de processus industriel de type tout à fait quelconque, indiqué schématiquement en 600. Il comprend en outre deux interfaces 510 et 512 pour la liaison avec l'unité centrale et avec le fréquence-mètre, respectivement.

On va maintenant décrire brièvement un certain nombre de fonctionnalités offertes par l'installation décrite ci-dessus, dont l'essentiel est assuré par programmation appropriée du calculateur 500.

Par exemple un programme principal permet de présenter à l'utilisateur un menu lui permettant d'accéder à cinq sous-programmes détaillés plus loin.

Le programme principal permet également avantageusement de modifier certains paramètres de communication, et notamment la vitesse de transmission de données en série entre le calculateur 500 et l'ordinateur industriel 600.

Un premier sous-programme sert à configurer l'installation et notamment :

– à fixer des valeurs de consigne et des valeurs minimales et maximales pour les mesures, valeurs qui délimitent des intervalles d'utilisation courants, à fixer également des valeurs de seuil qui, lors de leur franchissement par les valeurs mesurées, vont déclencher des alarmes soit sous forme de message à l'écran, soit encore sous forme de signaux sonores ou lumineux ;

– à attribuer à chaque capteur un identificateur, par exemple un nom, qui apparaîtra lors des affichages sur écran et des impressions ;

– à indiquer la présence d'écrans d'affichage extérieurs (autres que l'écran 504) ou de sorties analogiques ;

– à fixer l'échelle de temps des graphiques affichés (en particulier des graphiques indiquant l'évolution de l'humidité relative ou de l'activité d'eau mesurée en fonction du temps) ;

– à charger dans la mémoire vive ou dans la mémoire de masse du calculateur soit des isothermes de sorption, soit des adresses d'emplacements mémoires où de telles courbes sont mémorisées, et à modifier des isothermes préalablement mémorisées ; ces isothermes sont essentielles pour déduire des mesures d'activite d'eau et de température fournies par un capteur une valeur de teneur en eau correspondante ;

– à effectuer une nouvelle calibration lors du remplacement d'un ou plusieurs capteurs ;

– à fixer une durée maximale significative de l'existence d'un bouchon ou obstruction dans la canalisation qui achemine le produit dont on mesure l'humidité relative ou l'activité d'eau ; plus précisément, si pendant cette durée maximale l'humidité relative ou l'activité d'eau n'a varié que dans des limites très étroites, alors il en est déduit que c'est toujours la même partie du produit qui fait l'objet de la mesure, et qu'en conséquence la canalisation est probablement obstruée ; cette information est signalée sur l'écran 504 ;

– fixer la présence ou l'absence d'une imprimante pour la fixation sur papier des résultats.

Le second sous-programme est affecté aux mesures proprement-dites. Il comprend par exemple trois blocs :

– un bloc de mesure de température et d'activité d'eau ;

– un bloc de gestion du clavier 502 ; et

– un bloc de gestion de l'interface RS232C 508.

Le sous-programme effectue un branchement vers les deuxième et troisième blocs lors de l'apparition d'évènements particuliers ; après exécution, la main est rendue au premier bloc. Le second bloc gère les touches dites "touches de fonction" F1 à F10 du clavier 502, avec par exemple l'affectation suivante :

F1 sélection du capteur dont les valeurs de mesure sont affichées à l'écran ; par défaut, il s'agit du capteur No. 1 ; c'est cette sélection qui va commander en particulier le sélecteur 304 de l'unité centrale 300 ;

F2 affichage en mode texte des valeurs de mesure du capteur sélectionné par F1, et plus précisement de la date courante, de l'heure courante, des mesures réelles, des valeurs de consigne, des minima et maxima, des valeurs d'alarmes et éventuellement des messages d'erreur ou d'avertissement (notamment en cas de franchissement des valeurs d'alarme ou de sortie des fenêtres de mesure) ;

F3 affichage de graphiques, et en particulier d'un premier graphique de l'activité d'eau en fonction du temps et d'un second graphique de la température en fonction du temps ; il est possible d'afficher également les valeurs de consigne, les minima et maxima, la moyenne des mesure et les dernières valeurs mesurées ; la fenêtre de mesure est délimitée par deux premières droites horizontales et la valeur de consigne par une troisième droite horizontale située entre les deux premières ; dans le cas où une erreur ou analogue apparaît au niveau des mesures d'un autre capteur, un message est affiché ; la surveillance simultanée de tous les capteurs est ainsi garantie ;

F4 affichage de graphiques analogue à celui obtenu avec la touche F3, avec en outre l'affichage de la teneur en eau en fonction du temps, déterminée à partir des informations d'activité d'eau et de température et des isothermes mémorisées correspondant au produit sur lequel on effectue les mesures ;

F5 autre variante d'affichage, les courbes d'isothermes teneur en eau/activité d'eau, les consignes, les minima et maxima et les valeurs d'alarme pour chaque grandeur physique, les moyennes, les dernières valeurs mesurées ;

F6 réinitialisation du calcul des moyennes ;

F7 aperçu des mesures pour les quatre capteurs simultanément, en association avec leur identificateur respectif ;

F8 visualisation des N derniers messages d'erreurs ou d'avertissement pour chacun des capteurs ;

F9 réinitialisation de l'affichage des messages, qui sont cependant conservés en mémoire en association avec chaque mesure ;

F10 arrêt du programme.

Bien entendu, les sous-programmes des touches F4 et F5 ne peuvent être activés que s'il existe des isothermes mémorisées pour le capteur sélectionné.

Enfin le troisième bloc gère l'interface série 508 selon un protocole prédéterminé. Plus précisément, dès l'apparition sur cette interface d'un message en provenance de l'ordinateur 600, le sous-programme du premier bloc est interrompu pour effectuer un branchement sur le troisième bloc. Selon le type de message reçu, la réponse est soit immédiate, soit différée jusqu'à l'achèvement du sous-programme en cours du premier bloc (notamment si des paramètres de mesure sont modifiés). Ces fonctionnalités permettent notamment de faire fonctionner l'ordinateur 600 en "maître" et le calculateur 500 en "esclave". L'inverse est bien entendu également possible.

Le troisième sous-programme auquel on accède par le programme principal est une visualisation des X dernières mesures, X pouvant être par exemple de l'ordre de quelques milliers à quelques dizaines de milliers. Plus précisément, le sous-programme de mesure décrit plus haut effectuant une mémorisation systématique en mémoire de masse, sous forme d'une pile de X éléments, des informations suivantes:

- date et heure de la mesure ;
- température, humidité relative ou activité d'eau et teneur en eau ;
- erreurs apparues au cours de cette mesure.

Le troisième sous-programme permet de sélectionner un capteur donné, de choisir une fenêtre, de l'appliquer aux X dernières mesures mémorisées pour en extraire les mesures entrant dans cette fenêtre, notamment à des fins de visualisation et/ou de création d'un fichier spécifique sur disquette ou disque dur.

Le quatrième sous-programme accessible depuis le programme principal est destiné à permettre la recalibration d'un capteur. En particulier, si l'un des capteurs semble donner des mesures incorrectes ou incohérentes, on utilise alors une solution standard d'un sel non saturé dont la loi d'évolution de l'humidité relative en fonction de la température est parfaitement connue. Le capteur est placé de manière à être au contact de cette solution, et le sous-programme se place alors dans une phase d'attente de la stabilisation des pressions. Une fois cette stabilisation atteinte, la recalibration est effectuée en confrontant les valeurs fournies par le capteur avec les valeurs attendues, connues.

Enfin le cinquième sous-programme est un programme d'aide de l'utilisateur, qui peut être appelé à tout instant.

Les avantages du capteur et de l'installation selon la présente invention sont les suivants :

- les mesures de température et d'humidité relative ou d'activité d'eau sont extrêmement précises (température : ± 0,05 °C ; humidité relative : ±0,10%) ; pour ce qui est de l'humidité relative, cette bonne précision est due en particulier au fait que la mesure propre à la présente invention est en réalité une mesure de variation de masse, sans faire intervenir de paramètres électriques comme c'est le cas dans la technique antérieure;
- les temps de réponse sont courts (en statique, c'est-à-dire sans courant d'air : environ 2 minutes ; en dynamique, c'est-à-dire avec courant d'air : environ 12 secondes) ; ces temps de réponse courts sont obtenus grâce en particulier à l'emploi d'une couche très mince de matériau adsorbant dans les quartz qui captent l'activité d'eau.

La présente invention s'applique avantageusement à la mesure d'humidité relative, d'activité d'eau et de teneur en eau de toute sorte de produit solide, par exemple sous forme granuleuse ou pulvérulente.

On peut citer par exemple :

- les produits agricoles tels qu'engrais, céréales, fourrages, épices, tabacs ;
- les produits agro-alimentaires tels que les aliments pour bétail et animaux domestiques, aliments secs, biscuiterie, poudre de lait et d'oeuf, flocons de pommes de terre ;
- les produits pharmaceutiques secs tels que poudres ou comprimés ;
- les produits de chimie minérale ;
- les matériaux de construction tels que plâtre ou ciment ;
- les matières plastiques.

La mesure peut se faire également en liaison avec des sécheurs ou mélangeurs pour des produits quelconques.

Bien entendu, la présente invention n'est nullement limitée à la forme de réalisation décrite ci-dessus et représentée sur les dessins, mais l'homme de l'art saura y apporter toute variante ou modification conforme à son esprit.

**Revendications**

1. Capteur d'humidité relative ou d'activité d'eau, caractérisé en ce qu'il comprend, en combinaison :

   un corps (130) définissant une cavité,

   au moins un élément sensible à l'humidité (112a, 112b) comportant une languette résonnante (1121a, 1121b) en quartz revêtue au moins partiellement d'un matériau adsorbant (1123a, 1123b), et disposée au sein de la cavité,

   au moins un élément résonnant (114a, 114b) sensible à la température disposé également dans la cavité,

   au moins une membrane (102, 110) apte à laisser passer la vapeur tout en constituant une barrière aux liquides, située entre la cavité et le milieu dont l'humidité relative et/ou l'activité d'eau est à mesurer, et

   des moyens (200, 300, 400, 500) pour déterminer la fréquence de résonnance des éléments sensibles et en déduire la valeur de l'humidité relative ou de l'activité d'eau du milieu, ainsi que de la température.

2. Capteur selon la revendication 1, caractérisé en ce que le ou chaque élément sensible à l'humidité (112a, 112b) est logé dans un boîtier ouvert (1122a, 1122b) en céramique.

3. Capteur selon l'une des revendications 1 et 2, caractérisé en ce qu'il comprend deux éléments sensibles à l'humidité identiques (112a, 112b), disposés sensiblement à égale distance de la membrane (102, 110).

4. Capteur selon l'une des revendications 1 à 3, caractérisé en ce que le ou chaque élément résonnant sensible à la température (114a, 114b) est un quartz diapason et en ce qu'il est prévu des moyens (200, 300, 400, 500) pour déterminer la fréquence de résonnance du ou des quartz diapason et en déduire la valeur de la température.

5. Capteur selon l'une des revendications 1 à 4, caractérisé en ce qu'il est prévu deux éléments sensibles à la température dont l'un (114a) est situé sensiblement à la même distance de la membrane (102, 110) que le ou les éléments sensibles à l'humidité (112a, 112b) et dont l'autre (114b) est situé à plus grande distance de la membrane, et en ce qu'il est prévu des moyens de régulation de température comprenant un moyen de chauffage (116) disposé dans la cavité et commandé en fonction de la différence entre les températures mesurées par les deux éléments sensibles à la température.

6. Capteur selon la revendication 5, rattachée à la revendication 3, caractérisé en ce qu'il comprend un premier circuit imprimé (146) portant les deux éléments sensibles à l'humidité (112a, 112b) et le premier élément sensible à la température (114a) et un second circuit imprimé (142) portant le second élément sensible à la température (114b) et le moyen de chauffage (116), le premier circuit étant disposé entre le second circuit et la ou les membranes (102, 110).

7. Capteur selon la revendication 6, caractérisé en ce qu'il comprend en outre un connecteur amovible (118) dont les éléments de connexion (140a, 140b) fixés au capteur constituent également des moyens d'assemblage des deux circuits imprimés (146, 142) l'un au dessus de l'autre.

8. Capteur selon l'une des revendications 1 à 7, caractérisé en ce qu'il est prévu une première membrane (102) en acier inoxydable dans laquelle sont pratiqués une pluralité de trous de faibles dimensions, et une seconde membrane (110) en polytétrafluoréthylène expansé, les deux membranes étant placées sensiblement l'une contre l'autre et la membrane en acier inoxydable étant située du côté extérieur par rapport à la cavité.

9. Capteur selon la revendication 8, caractérisé en ce que les deux membranes (102, 110) sont montées sur une bague support (108) elle-même montée de façon amovible sur le corps (130) du capteur.

10. Capteur selon l'une des revendications 8 et 9, caractérisé en ce que la membrane en acier (102) a une épaisseur comprise entre 0,02 et 0,05 mm, en ce que les trous ont un diamètre compris entre 0,02 et 0,08 mm et en ce que la surface des trous représente de l'ordre de 15 à 25 % de la surface totale de la membrane.

**11.** Installation de mesure de l'activité d'eau et de la teneur en eau d'un ou plusieurs produits en plusieurs endroits d'un équipement industriel de traitement, caractérisée en ce qu'elle comprend :

une pluralité de capteurs (100) selon l'une des revendications 1 à 10,

des moyens modulateurs optiques (200) associés à chaque capteur pour délivrer un signal optique représentatif du signal électrique de résonnance du ou des éléments sensibles à l'humidité du capteur associé,

une unité centrale (300) reliée aux moyens modulateurs optiques par une pluralité de fibres optiques (207) et comprenant :

une pluralité de démodulateurs optiques (304) respectivement associés à chaque capteur, et aptes à convertir des signaux optiques reçus en signaux électriques,

des moyens de sélection (306) pour appliquer sur une sortie l'un au choix desdit : signaux électriques,

des moyens de mesure de fréquence (400), et

des moyens (500) pour commander les moyens de sélection (306) et pour convertir les valeurs de fréquences en des valeurs d'humidité relative ou d'activité d'eau en association avec chacun des capteurs.

**12.** Installation selon la revendication 11, caractérisée en ce que chaque capteur (100) comprend au moins deux éléments sensibles à quartz (112a, 112b, 114a, 114b), et en ce que les moyens modulateurs optiques (200) comprennent en outre un moyen de sélection (204) pour moduler l'un au choix des signaux électriques de résonnance des différents éléments sensibles.

**13.** Installation selon la revendication 12, caractérisée en ce que chaque capteur comprend (100) au moins un élément sensible à l'humidité (112a, 112b) et un élément sensible à la température (114a, 114b), et en ce que les moyens de commande et de sélection (500) comprennent en outre des moyens pour calculer à partir de valeurs d'activité d'eau et de valeurs de température obtenues et à partir de courbes isothermes teneur en eau/activité d'eau mémorisées et associées au(x) produits dont l'activité d'eau est mesurée, des valeurs de teneur en eau du ou des produits.

**14.** Installation selon l'une des revendications 11 à 13, caractérisée en ce qu'elle comprend en outre des moyens d'affichage (504) pour afficher l'évolution de l'activité d'eau et/ou de la teneur en eau du ou des produits en fonction du temps.

**15.** Installation selon l'une des revendications 11 à 14, caractérisée en ce qu'elle comprend en outre des moyens (500) pour comparer des valeurs d'activité d'eau ou de teneur en eau avec au moins une valeur de seuil et pour signaler le franchissement du ou des seuils.

## FIG_1

## FIG_3

12

## FIG.2

FIG_4

## FIG_5

Office européen
des brevets

**RAPPORT DE RECHERCHE EUROPEENNE**

Numero de la demande

EP 91 40 0026

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| D,A | SENSORS AND ACTUATORS, vol. 11, no. 4, mai/juin 1987, pages 319-328, Lausanne, CH; J.-P. RANDIN et al.: "Relative humidity measurements using a coated piezoelectric quartz crystal sensor" * Résumé * --- | 1 | G 01 N 27/00 |
| A | ADVANCES IN INSTRUMENTATION, vol. 41, partie 1, 1986, pages 301-301, Research Triangle Park, NC, US; W.P. CAREY et al.: "The IBM-XT and sensor arrays for environmental monitoring" * Pages 301-307 * --- | 1 | |
| A | US-A-3 534 585 (J.E. WEBB) * Résumé * --- | 1 | |
| A | EP-A-0 072 744 (J.M. O'CONNOR) * Page de garde * ----- | 1 | |
| | | | **DOMAINES TECHNIQUES RECHERCHES (Int. Cl.5)** |
| | | | G 01 N |

Le présent rapport a été établi pour toutes les revendications

| Lieu de la recherche | Date d'achèvement de la recherche | Examinateur |
|---|---|---|
| LA HAYE | 17-04-1991 | DUCHATELLIER M.A. |